# EUROPÄISCHE PATENTSCHRIFT

(11) **EP 1 139 194 B1**
(45) Veröffentlichungstag und Bekanntmachung des Hinweises auf die Patenterteilung: **14.05.2008**
(21) Anmeldenummer: 00126666.7
(22) Anmeldetag: 05.12.2000
(51) Int. Cl.: G05G 1/04, F16B 4/00, F16B 5/00, F16C 11/04, F16K 31/52

(54) **Wegeventil mit mechanischer Betätigungseinrichtung**
Multiple-way valve with mechanical actuating device
Distributeur avec dispositif d'actionnement mécanique

(30) Priorität: 28.03.2000 DE 10015298
(43) Veröffentlichungstag der Anmeldung: 04.10.2001
(73) Patentinhaber: ROBERT BOSCH GMBH, 70442 Stuttgart (DE)
(72) Erfinder: Koetter, Wolfgang, 71706 Markgroeningen (DE); Goeppel, Hans, 66482 Zweibruecken (DE)

(56) Entgegenhaltungen:
- DE-C1- 3 901 085
- DE-U1- 9 108 156
- US-A- 2 471 285
- US-A- 3 602 245

## Beschreibung

### Stand der Technik

Die Erfindung geht aus von einem Wegeventil mit mechanischer Betätigungseinrichtung nach der im Oberbegriff des Anspruchs 1 näher angegebenen Gattung.

Es ist schon ein solches Wegeventil mit mechanischer Betätigungseinrichtung aus der US 3 602 245 bekannt, bei dem stirnseitig am Gehäuse ein Lagerbock befestigt ist, an dem ein Schaltelement mittels Bolzen gelenkig gelagert ist. Ein im Gehäuse geführter Steuerschieber ist an seinem aus dem Gehäuse herausragenden Ende über einen zusätzlichen Bolzen gelenkig mit dem Schalthebel verbunden. Diese mechanische Betätigungseinrichtung ist nur stark vereinfacht dargestellt, da es bei diesem Wegeventil vor allem um die mechanische Rastung des Steuerschiebers geht. Bei handelsüblichen Wegeventilen werden zur Sicherung der Bolzen meistens beidseitig Federringe und Sicherungsringe verwendet, die in Einstiche der Bolzen einrasten oder es werden Splinte in Querbohrungen zur Sicherung der Bolzen verwendet. Diese Sicherung der Bolzen erfordert eine aufwendige Bearbeitung der Bolzen mit Einstichen, Querbohrungen und zusätzliche Teile wie Federring, Sicherungsring oder Splint sowie mehrere Montagevorgänge.

Solche Betätigungseinrichtungen sind daher kritisch gegenüber hohen Qualitätsanforderungen und zudem auch teuer. Das Schaltelement selbst ist häufig als bearbeitetes Metallteil ausgeführt, an dem der Handhebel fest angebracht ist. Neben der teueren Bearbeitung hat eine solche Ausführung auch den Nachteil, daß bei einer Verwendung der Betätigungseinrichtung als Notbetätigung, zum Beispiel bei einer elektrohydraulischen Hauptbetätigung, der Handhebel angebaut ist, dabei Bauraum benötigt und zudem zu störenden Schwingungen neigt.

### Vorteile der Erfindung

Das erfindungsgemäße Wegeventil mit den kennzeichnenden Merkmalen des Hauptanspruchs hat demgegenüber den Vorteil, daß es eine einfache, kostengünstige und montagefreundliche Bauweise ermöglicht, die den hohen Anforderungen im Betrieb gerecht wird. Die mechanische Betätigungseinrichtung baut zudem kompakt und mit wenigen Teilen, wodurch auch die Sicherheit der Betätigungseinrichtung erhöht wird. Das Schaltelement kann nun als kostengünstiges Kunststoffteil ohne zusätzliche Bearbeitung ausgeführt werden. Die beiden Bolzen sind selbstsichernd, wobei zu deren Sicherung nur ein einfach herzustellender Absatz am Bolzen erforderlich ist, so daß Einstiche, Querbohrungen und ähnliche Bearbeitungsnuten entfallen. Der Einbau erfolgt nun ohne Federringe, Sicherungsringe oder Splinte, so daß die Montage einfacher und schneller durchführbar ist. Ferner läßt sich die Betätigungseinrichtung auch als Notbetätigung verwenden, wobei am Schaltelement kein Handhebel angebaut wird; im Notfall genügt ein einfaches Werkzeug zur Betätigung im Gewinde oder in einem Vierkant.

Durch die in den Unteransprüchen aufgeführten Maßnahmen sind vorteilhafte Weiterbildungen und Verbesserungen des im Hauptanspruch angegebenen Wegeventils mit mechanischer Betätigungseinrichtung möglich.

### Zeichnung

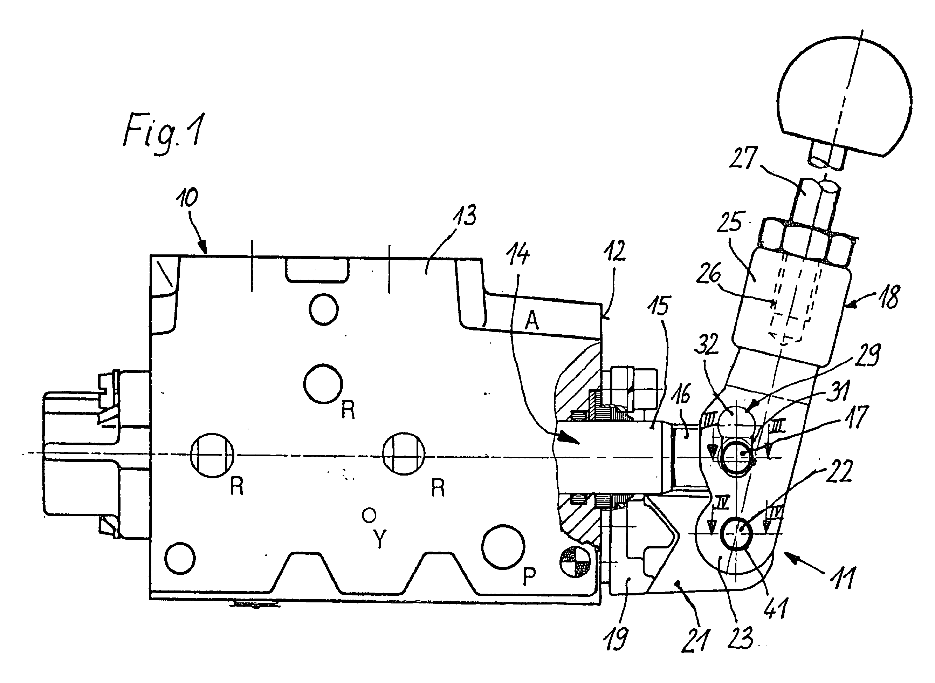

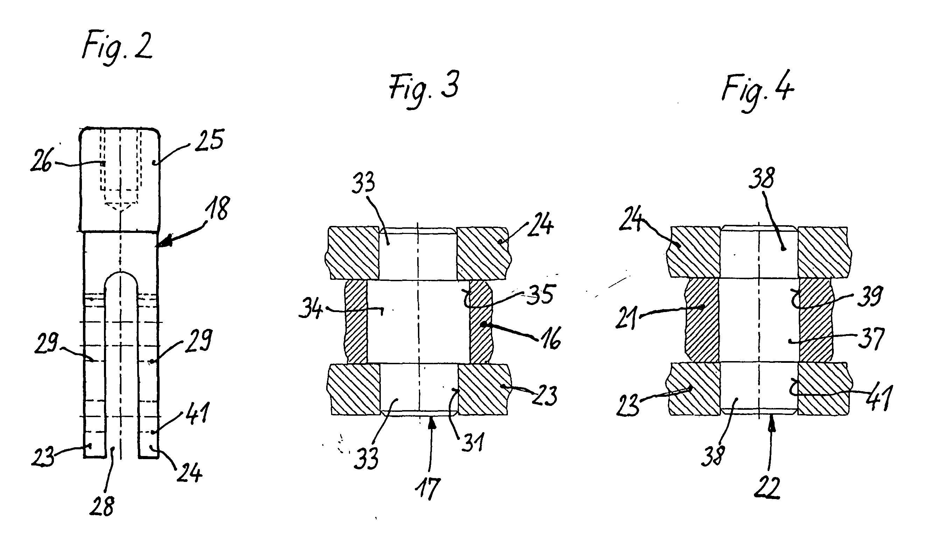

Ein Ausführungsbeispiel der Erfindung ist in der Zeichnung dargestellt und in der nachfolgenden Beschreibung erläutert. Es zeigen die Figur 1 eine Ansicht des erfindungsgemäßen Wegeventils mit mechanischer Betätigungseinrichtung, Figur 2 eine Seitenansicht des Schaltelements nach Figur 1, Figur 3 einen Teilschnitt nach III-III in Figur 1 in vergrößertem Maßstab und Figur 4 einen Teilschnitt nach IV-IV in Figur 1 in vergrößertem Maßstab.

### Beschreibung des Ausführungsbeispiels

Die Figur 1 zeigt ein Wegeventil 10 mit einer mechanischen Betätigungseinrichtung 11, die an einer Stirnseite 12 des Wegeventils 10 angebaut ist. Das Wegeventil 10 hat ein Gehäuse 13, in dem ein längsbeweglicher Steuerschieber 14 gleitend geführt ist und mit seinem Schieberabschnitt 15 über die Stirnseite 12 hinaus in die Betätigungseinrichtung 11 ragt. Der Schieberabschnitt 15 weist zu diesem Zweck ein durch beidseitige Abflachungen ausgebildetes, flaches Schieberende 16 auf, das über einen zweiten Bolzen 17 mit einem Schaltelement 18 gelenkig gekoppelt ist. Ferner weist die Betätigungseinrichtung 11 einen am Gehäuse 13 stirnseitig befestigten Lagerbock 19 auf, von dem ein lappenartiger Steg 21 in Längsrichtung des Steuerschiebers 14 absteht. An diesen Steg ist das Schaltelement 18 mit Hilfe eines ersten Bolzen 22 ebenfalls gelenkig gelagert.

Wie die Figur 1 in Verbindung mit Figur 2, die als Einzelheit eine Seitenansicht des Schaltelements 18 zeigt, näher hervorgeht, hat das Schaltelement 18 im wesentlichen eine gabelförmige Form, wobei die beiden Schenkel 23 und 24 parallel zueinander verlaufen und in einem Kopfteil 25 eine Gewindebohrung 26 angeordnet ist, in der ein Handhebel 27 befestigbar ist. Der zwischen den Schenkeln 23 und 24 gebildete Spalt 28 ist so breit gewählt, daß das Schaltelement 18 möglichst reibungsarm und spielfrei auf dem Steg 21 des Lagerbocks 19 beziehungsweise auf dem Schieberende 16 geführt ist.

Wie die Figur 1 mit Figur 2 ferner zeigen, weisen die beiden Schenkel 23 und 24 zur Aufnahme des zweiten Bolzens 17 jeweils ein Langloch 29 auf, wobei die beiden Langlöcher untereinander gleich ausgebildet sind. Ein solches Langloch 29 besteht aus einem Führungsschlitz 31, der an seinem einen Ende zu einer Montageaussparung 32 aufgeweitet ist. Diese Montageaussparung 32 ist hier als Bohrung ausgebildet und hat einen Durchmesser, der größer ist als die Breite des Führungsschlitzes 31.

Die Figur 3 zeigt nun einen Teilschnitt nach III-III in Figur 1 und damit die Gelenkverbindung zwischen dem Schaltelement 18 und dem Steuerschieber 14, wobei dies in vergrößertem Maßstab dargestellt ist. Wie besonders deutlich aus Figur 3 erkennbar ist, weist der zweite Bolzen 17 zwischen seinen äußeren Endabschnitten 33 einen Mittenabschnitt 34 mit größerem Durchmesser auf. Mit diesem Mittenabschnitt 34 ist der zweite Bolzen 17 in einer Bohrung 35 des Steuerschiebers 14 gelagert. Der Durchmesser dieser Bohrung 35 und damit auch des Mittenabschnitts 34 sind nennenswert größer als der Durchmesser des Bolzens 17 in seinen Endabschnitten 33, mit denen der Bolzen 17 in den Führungsschlitzen 31 des Schaltelements 18 geführt ist. Der Durchmesser des Mittenabschnitts 34 ist dabei so groß gewählt, daß sich eine einwandfreie axiale Sicherung des Bolzens 17 zwischen den Schenkeln 23 und 24 in seiner axialen Lage ergibt. Ferner ist der Durchmesser der Montageaussparung 32 so groß gewählt, daß der Bolzen 17 mit seinem Mittenabschnitt 34 in die gezeichnete axiale Lage in das Schaltelement 18 axial einführbar ist.

In Figur 4 ist nur als Teilschnitt nach IV-IV die Gelenkverbindung zwischen Schaltelement 18 und Lagerbock 19 dargestellt. Der erste Bolzen 22 hat wie der erste Bolzen 17 einen Mittenabschnitt 37 dessen Durchmesser geringfügig größer ist als der Durchmesser seiner beiden Endabschnitte 38. Der Mittenabschnitt 37 des ersten Bolzens 22 ist in der zugeordneten Bohrung 39 im Steg 21 gelagert. Die Länge des Mittenabschnitts 39 in Achsrichtung entspricht der Breite des Spaltes 28 zwischen den Schenkeln 23, 24. Ferner ist der erste Bolzen 22 mit seinen äußeren Endabschnitten 38 in den Bohrungen 41 des Schaltelements 18 gelagert. Der Durchmesser des Mittenabschnitts 39 am ersten Bolzen 22 ist nur geringfügig größer als der Durchmesser der Endabschnitte 38 und damit der Bohrungen 41, so daß der erste Bolzen 22 mit seinem größeren mittleren Durchmesser durch die kleinere Bohrung 41 des Schaltelements 18 gepreßt werden kann. Zu diesem Zweck muß das Schaltelement 18 aus einem Material mit einer gewissen Elastizität bestehen, wozu das Schaltelement 18 vorzugsweise aus einem glasfaserverstärkten Kunststoff hergestellt wird. Dabei ist das Schaltelement 18 so ausgestaltet, daß es ohne große Schwierigkeiten aus Kunststoff gespritzt werden kann und keine Nachbearbeitung erfordert.

Die beiden Bolzen 17 und 22 werden zweckmäßigerweise aus Metall hergestellt, wobei diese sehr einfach herzustellen sind, da sie durch die verdickten Mittenabschnitte 34 beziehungsweise 37 lediglich einfache Absätze aufweisen; irgendwelche Einstiche oder Querbohrungen sind nicht erforderlich. Zudem sind die beiden Bolzen 17, 22 jeweils symmetrisch ausgebildet und haben Endabschnitte mit gleichem Durchmesser, so daß sie aus jeder Lage montierbar sind. Aus diesem Grund sind auch die Bohrungen 41 beziehungsweise die Langlöcher 29 in den beiden Schenkeln 23 und 24 gleich groß ausgeführt.

Die Montage der Betätigungseinrichtung 11 am Wegeventil 10 läßt sich relativ einfach durchführen. Nach der Befestigung des Lagerbocks 21 am Gehäuse 13 wird das Schaltelement 18 mit seinen Schenkeln 23 und 24 über das Schieberende 16 und den Steg 21 gesteckt. Dabei wird das Schaltelement 18 in eine Lage gebracht, bei der die Montageaussparungen 32, die als Bohrungen ausgeführt sind, koaxial zur Bohrung 35 im Schieberende 16 liegen. Ist dies der Fall, so kann der zweite Bolzen 17 in die Montageaussparung 32 von einer Seite her eingeführt werden, bis sein Mittenabschnitt 34 in dem Spalt 28 zum Liegen kommt. Ist der zweite Bolzen 17 in die in Figur 3 gezeigte axiale Lage eingelegt, so kann das Schaltelement 18 hoch gezogen werden, wodurch die Endabschnitte 33 des Bolzens 17 in den Bereich der Führungsschlitze 31 in den Langlöchern 29 gleiten. Bei dieser Bewegung kann das Schaltelement 18 eine Lage einnehmen, bei der die Bohrungen 41 im Schaltelement 18 koaxial zur Bohrung 39 im Lagerbock 19 liegen, so daß der erste Bolzen 22 eingepreßt werden kann. Aus seiner in Figur 4 dargestellten Lage kann der erste Bolzen 22 nur mit einer wesentlich erhöhten Kraft wieder entfernt werden. Nach der Montage der Bolzen 17, 22 ergeben diese eine Selbstsicherung und ermöglichen gelenkige Verbindungen, um den Längsschieber 14 im Wegeventil 10 in üblicher Weise zu betätigen.

Die mechanische Betätigungseinrichtung 11 läßt sich mit einem kostengünstigen Kunststoffteil herstellen, wobei die selbstsichernden Bolzen 17, 22 aus Metall für eine einfache, kompakte und stabile Bauweise sorgen, kaum zusätzliche Bearbeitung erfordern und mit seinen wenigen Bauelementen: hohe Sicherheitsanforderungen erfüllt. Sofern an einem Wegeventil eine elektrohydraulische Hauptbetätigung vorgesehen wird, und die mechanische Betätigungseinrichtung 11 nur als Notbetätigung dient, kann der Handhebel 27 entfallen, so daß weniger Bauraum benötigt und die Neigung zu störenden Schwingungen verringert wird. Im Notfall genügt dann ein einfaches Werkzeug zur Betätigung des Schaltelements 18 im Gewinde 26 oder an einem Vierkant des Kopfteils 25.

Selbstverständlich sind an der gezeigten Ausführungsform Änderungen möglich, ohne vom Umfang der Erfindung abzuweichen, der durch die anhängenden Ansprüche definiert wird. So können die Langlöcher 29 und die Bohrungen 41 bei Bedarf auch vertauscht angeordnet werden, so daß ein Langloch mit dem zweiten Bolzen 17 dem Gelenk am Lagerbock 19 zugeordnet wird. Auch ist es möglich, die Montageaussparung 32 nur in einem der beiden Schenkel 23, 24 vorzusehen, wobei dann die Montage des Bolzens 17 nur von einer Seite aus erfolgen kann.

## Patentansprüche

1. Wegeventil (10) mit mechanischer Betätigungseinrichtung für einen in einem Gehäuse (13) gleitend angeordneten Steuerschieber (14), mit einem am Gehäuse (13) befestigten Lagerbock (19), an dem ein zur Betätigung des Steuerschiebers (14) dienendes Schaltelement (18) mit Hilfe eines ersten Bolzens (22) schwenkbar gelagert ist und bei der das Schaltelement (18) über einen zweiten Bolzen (17) schwenkbar mit dem Steuerschieber (18) gekoppelt ist, **dadurch gekennzeichnet, daß** das Schaltelement (18) gabelförmig ausgebildet ist und zwischen seinen Schenkeln (23, 24) einen Abschnitt (16) des Steuerschiebers (14) und einen Steg (21) des Lagerbocks (19) aufnimmt, welche jeweils von dem Bolzen (17, 22) durchdrungen werden und das Schaltelement (18) führen, daß das Schaltelement (18) aus Kunststoff besteht, und daß beide Bolzen (17, 22) jeweils einen verdickten Mittenabschnitt (34, 37) aufweisen, so daß sie ohne zusätzliche Bauelemente selbstsichernd zwischen den Schenkeln (23, 24) des Schaltelements (18) gehalten sind.

2. Wegeventil nach Anspruch 1, **dadurch gekennzeichnet, daß** einer (22) der Bolzen (17, 22) einen Mittenabschnitt (37) aufweist, der einen geringfügig größeren Durchmesser als an seinen beiden Endabschnitten (38) hat, so daß der Bolzen (22) axial durch die zugeordnete, kleinere Bohrung (41) des elastischen Schaltelements (18) in seine Einbaulage einpreßbar ist und daß der Mittenabschnitt (37) in seiner axialen Länge gleich oder kleiner ist als der zugeordnete Abstand zwischen beiden Schenkeln (23, 24) des Schaltelements (18).

3. Wegeventil nach Anspruch 1 oder 2, **dadurch gekennzeichnet, daß** der andere (17) der Bolzen (17, 22) einen Mittenabschnitt (34) mit erheblich größerem Durchmesser als an seinen Endabschnitten (33) aufweist, so daß er in axialer Richtung zwischen beiden Schenkeln (23, 24) gesichert und geführt ist.

4. Wegeventil nach einem der Ansprüche 1 bis 3, **dadurch gekennzeichnet, daß** das Schaltelement (18) in beiden Schenkeln (23, 24) für den Bolzen (17) mit dem größeren Durchmesser am Mittenabschnitt (34) jeweils ein Langloch (29) aufweisen, von denen bei mindestens einem Langloch ein Führungsschlitz (31) für den Endabschnitt (33) des Bolzens (17) in eine Montageaussparung (32) übergeht, die mindestens gleich oder größer ist als der Querschnitt des Mittenabschnitts (34) am zugeordneten Bolzen (17).

5. Wegeventil nach Anspruch 4, **dadurch gekennzeichnet, daß** die Langlöcher (29) in beiden Schenkeln (23, 24) mit Montageaussparungen (32) ausgeführt sind.

6. Wegeventil nach einem der Ansprüche 4 und 5, **dadurch gekennzeichnet, daß** der Bolzen (17) mit dem dickeren Mittenabschnitt (34) mit seinen Endabschnitten (33) in den Führungsschlitzen (31) geführt ist.

7. Wegeventil nach einem der Ansprüche 4 bis 6, **dadurch gekennzeichnet, daß** die Langlöcher (29) im Schaltelement (18) dem zweiten Bolzen (17) für die Anlenkung des Steuerschiebers (14) zugeordnet sind.

8. Wegeventil nach Anspruch 7, **dadurch gekennzeichnet, daß** die Montageaussparungen (32) im Langloch (31) auf der vom zweiten Bolzen (17) abgewandten Seite angeordnet sind und insbesondere als Bohrungen ausgebildet sind.

9. Wegeventil nach Anspruch 7 oder 8, **dadurch gekennzeichnet, daß** der erste, am Lagerbock (19) befestigte Bolzen (22) den Mittenabschnitt (37) mit dem gegenüber seinen Endabschnitten (38) geringfügig größeren Durchmesser aufweist.

10. Wegeventil nach einem der Ansprüche 1 bis 9, **dadurch gekennzeichnet, daß** die Bolzen (17, 22) aus Metall bestehen und insbesondere symmetrisch ausgebildet sind.

11. Wegeventil nach einem der Ansprüche 1 bis 10, **dadurch gekennzeichnet, daß** das Schaltelement (18) aus insbesondere glasfaserverstärktem Kunststoff besteht.

12. Wegeventil nach einem der Ansprüche 1 bis 11, **dadurch gekennzeichnet, daß** am Schaltelement (18) ein Handhebel (27) austauschbar angeordnet ist.

## Claims

1. Directional valve (10) comprising a mechanical actuating device, for a control slide (14) arranged slideably in a housing (13), with a bearing block (19) which is fastened to the housing (13) and on which a switching element (18) serving for actuating the control slide (14) is mounted pivotably with the aid of a first bolt (22), the switching element (18) being coupled pivotably to the control slide (18) via a second bolt (17), **characterized in that** the switching element (18) is of fork-shaped design and between its legs (23, 24) receives a portion (16) of the control slide (14) and a web (21) of the bearing block (19), through which portion and which web the bolts (17, 22) penetrate respectively and guide the switching element (18), **in that** the switching element (18) consists of plastic, and **in that** the two bolts (17, 22) each have a thickened middle portion (34, 37), so that they are held self-lockingly between the legs (23, 24) of the switching element (18) without additional structural elements.

2. Directional valve according to Claim 1, **characterized in that** one (22) of the bolts (17, 22) has a middle portion (37) which has a slightly larger diameter than at its two end portions (38), so that the bolt (22) can be pressed axially into its installation position through the assigned smaller bore (41) of the elastic switching element (18), and **in that** the middle portion (37) is in its axial length identical to or smaller than the assigned spacing between the two legs (23, 24) of the switching element (18).

3. Directional valve according to Claim 1 or 2, **characterized in that** the other (17) of the bolts (17, 22) has a middle portion (34) with a considerably larger diameter than at its end portions (33), so that it is secured and guided in the axial direction between the two legs (23, 24).

4. Directional valve according to one of Claims 1 to 3, **characterized in that** the switching element (18) has in both legs (23, 24), for the bolt (17) with the larger diameter at the middle portion (34), in each case a long hole (29), from which, in the case of at least one long hole, a guide slot (31) for the end portion (33) of the bolt (17) merges into a mounting clearance (32) which is at least identical to or greater than the cross section of the middle portion (34) on the assigned bolt (17).

5. Directional valve according to Claim 4, **characterized in that** the long holes (29) in the two legs (23, 24) are designed with mounting clearances (32).

6. Directional valve according to one of Claims 4 and 5, **characterized in that** the bolt (17) having the thicker middle portion (34) is guided with its end portions (33) in the guide slots (31).

7. Directional valve according to one of Claims 4 to 6, **characterized in that** the long holes (29) in the switching element (18) are assigned to the second bolt (17) for the articulation of the control slide (14).

8. Directional valve according to Claim 7, **characterized in that** the mounting clearances (32) in the long hole (31) are arranged on the side facing away from the second bolt (17) and are designed, in particular, as bores.

9. Directional valve according to Claim 7 or 8, **characterized in that** the first bolt (22) fastened to the bearing block (19) has the middle portion (37) with the slightly larger diameter in relation to its end portions (38).

10. Directional valve according to one of Claims 1 to 9, **characterized in that** the bolts (17, 22) consist of metal and, in particular, are designed symmetrically.

11. Directional valve according to one of Claims 1 to 10, **characterized in that** the switching element (18) consists, in particular, of glass-fibre-reinforced plastic.

12. Directional valve according to one of Claims 1 to 11, **characterized in that** a hand lever (27) is arranged exchangeably on the switching element (18).

## Revendications

1. Distributeur (10) comportant une installation d'actionnement mécanique pour un tiroir de commande (14) coulissant dans un boîtier (13), ayant un bloc-palier (19) fixé au boîtier (13), et recevant de manière pivotante à l'aide d'un premier goujon (22), un élément de commutation (18) servant à actionner le tiroir de commande (14) et l'élément de commutation (18) étant couplé de façon pivotante au tiroir de commande (18) par un second goujon (17),
**caractérisé en ce que**
l'élément de commutation (18) est en forme de fourche et reçoit entre ses branches (23, 24), un segment (16) du tiroir de commande (14) et une entretoise (21) du bloc-palier (19) traversés respectivement par un goujon (17, 22) et guidant l'élément de commutation (18),
l'élément de commutation (18) étant en matière plastique et
les deux goujons (17, 22) ayant chacun un segment central (34, 37) renforcé pour être tenus sans composant supplémentaire, de façon autobloquante entre les branches (23, 24) de l'élément de commutation (18).

2. Distributeur selon la revendication 1,
**caractérisé en ce que**
l'un (22) des goujons (17, 22) comporte un segment central (37) ayant un diamètre légèrement supérieur à celui des deux segments d'extrémité (38) de façon que le goujon (22) puisse être enfoncé de force, axialement à travers le plus petit perçage (41) associé de l'élément de commutation (18), élastique, pour passer en position de montage et
le segment central (37) a une longueur axiale égale ou inférieure à celle de la distance correspondante entre les deux branches (23, 24) de l'élément de commutation (18).

3. Distributeur selon la revendication 1 ou 2,
**caractérisé en ce que**
l'autre (17) des goujons (17, 22) comporte un segment central (34) de diamètre beaucoup plus important que celui de ses segments d'extrémité (33) de façon à être bloqué et guidé dans la direction axiale entre les deux branches (23, 24).

4. Distributeur selon l'une des revendication 1 à 3,
**caractérisé en ce que**
l'élément de commutation (18) présente dans les deux branches (23, 24) pour le goujon (17) dont le segment central (34) a un grand diamètre, chaque fois un trou oblong (29) et au moins un trou oblong comporte une fente de guidage (31) pour le segment d'extrémité (33) du goujon (17) rejoignant un dégagement de montage (32) au moins égal ou supérieur à la section du segment central (34) du goujon (17) correspondant.

5. Distributeur selon la revendication 4,
**caractérisé en ce que**
les trous oblongs (29) des deux branches (23, 24) comportent des dégagements de montage (32).

6. Distributeur selon l'une des revendications 4 et 5,
**caractérisé en ce que**
le goujon (17) est guidé par son segment central (34) plus épais avec ses segments d'extrémité (33) dans les fentes de guidage (31).

7. Distributeur selon l'une des revendications 4 à 6,
**caractérisé en ce que**
les trous oblongs (29) sont associés dans l'élément de commutation (18) au second goujon (17) pour l'articulation du tiroir de commande (14).

8. Distributeur selon la revendication 7,
**caractérisé en ce que**
les dégagements de montage (32) du trou oblong (31) sont prévus sur le côté opposé au second goujon (17) et sont réalisés notamment sous la forme de perçages.

9. Distributeur selon les revendications 7 ou 8,
**caractérisé en ce que**
le premier goujon (22) fixé au bloc-palier (19) a un segment central (37) de diamètre légèrement supérieur à celui de ses segments d'extrémité (38).

10. Distributeur selon l'une des revendications 1 à 9,
**caractérisé en ce que**
les goujons (17, 22) sont en métal et ils sont notamment symétriques.

11. Distributeur selon l'une des revendications 1 à 10,
**caractérisé en ce que**
l'élément de commutation (18) est notamment en matière plastique renforcée par des fibres de verre.

12. Distributeur selon l'une des revendications 1 à 11,
**caractérisé en ce que**
l'élément de commutation (18) porte un levier à main (27) monté de manière amovible.
